# EUROPEAN PATENT APPLICATION

(11) **EP 4 851 112 A1**
(43) Date of publication of application: **09.12.2026**
(21) Application number: 25923608.1
(22) Date of filing: 29.12.2025
(51) Int. Cl.: C01B 33/18

(54) **SILICA PARTICLES AND PREPARATION METHOD THEREFOR**

(30) Priority: 22.04.2025 CN 202510508700
(71) Applicant: Zhejiang Third Age Material Technology Co., Ltd., Huzhou, Zhejiang 313000 (CN)
(72) Inventor: WANG, Wencong, Huzhou, Zhejiang 313000 (CN); YANAGIHARA, Takeshi, Huzhou, Zhejiang 313000 (CN); LI, Wen, Huzhou, Zhejiang 313000 (CN); YANG, Yufeng, Huzhou, Zhejiang 313000 (CN)
(74) Representative: Høiberg P/S
(86) International application number: PCT/CN2025/146662
(87) International publication number: WO 2026/223127

(57) **Abstract**

The present invention discloses silicon dioxide particles and a preparation method thereof. The preparation method of the silicon dioxide particles comprises: mixing fumed silica and water to form a suspension; freezing the suspension into a solid state; and thawing the solid material and performing solid-liquid separation to obtain solid matter. The preparation method of silicon dioxide particles of the present disclosure adopts fumed silica as a raw material and compresses and aggregates fumed silica into dense large particles through a freezing step. The method of the present disclosure involves no chemical reactions, has controllable processes and does not introduce external impurities, so high-purity silicon dioxide particles can be prepared. Meanwhile, fumed silica is used as the raw material, which has lower costs compared with organosilicon raw materials. The technological conditions are simple and easy to control, the operation is convenient, and the method is suitable for large-scale industrial production.

## Description

### TECHNICAL FIELD

The present disclosure belongs to the technical field of chemical production, and specifically relates to a preparation method of silicon dioxide particles and silicon dioxide particles prepared by the method.

### BACKGROUND

High-purity silicon dioxide particles refer to granular silicon dioxide products with a SiO₂ content of more than 99.99%. They possess excellent chemical stability, high insulation and voltage resistance, and an extremely low volume expansion coefficient, and are widely applied in emerging industries such as new-generation information technology, new material industry, and energy conservation and environmental protection industry, with huge market demand. At present, there are two main preparation technologies for high-purity silicon dioxide particles: natural quartz purification and artificial synthesis.

The natural quartz purification method is restricted by limited natural quartz resources, high purification costs, and insufficient purity of the obtained silicon dioxide particles. Therefore, artificial synthesis of high-purity silicon dioxide particles has become the mainstream development trend of silicon dioxide particles in the future. Existing artificial synthesis methods for high-purity silicon dioxide particles have various technical defects to varying degrees, comprising low product purity, high preparation costs, complicated preparation processes, high energy consumption, high dependence on equipment, and a large amount of environmentally polluting substances easily generated during preparation.

For example, Mitsubishi Chemical uses tetraethyl orthosilicate as a raw material, prepares silicon-containing gel via a sol-gel method, and then obtains high-purity silicon dioxide particle products after drying, crushing, sieving and calcination. The use of organosilicon compounds as raw materials leads to high raw material costs; ion exchange resins and other purification means are required to remove impurities, resulting in complicated processes and high costs. The sol-gel reaction makes it difficult to precisely control reaction conditions. In addition, various chemical reagents are used in the synthesis process, causing environmental pollution and making it unsuitable for large-scale production.

Therefore, it is particularly important to develop a method for synthesizing high-purity silicon dioxide particles with simple synthesis processes, convenient operation control, high synthesis efficiency and product purity, and suitability for continuous large-scale production.

### SUMMARY

To solve the above problems, the present disclosure provides a preparation method of silicon dioxide particles and silicon dioxide particles prepared by the method.

In one aspect, the present disclosure provides a preparation method of silicon dioxide particles, comprising: mixing fumed silica and water to form a suspension; freezing the suspension into a solid state; and thawing the solid material and performing solid-liquid separation to obtain a solid matter.

According to one embodiment of the present disclosure, after the suspension is frozen into the solid state, it is kept at a freezing temperature of -2 °C or lower for more than 10 minutes.

According to another embodiment of the present disclosure, the particle size of the fumed silica ranges from 5 nm to 100 nm.

According to another embodiment of the present disclosure, ammonia water is added to the mixed system during mixing of the fumed silica and water.

According to another embodiment of the present disclosure, the mass content of the fumed silica in the suspension ranges from 1 % to 30 %.

According to another embodiment of the present disclosure, the preparation method further comprises: crushing the solid matter to obtain small particles with a particle size ranging from 50 µm to 300 µm; and calcining the small particles at a calcination temperature of 950 °C or higher.

According to another embodiment of the present disclosure, the calcination step is maintained at the calcination temperature for more than 30 minutes.

In another aspect, the present disclosure provides silicon dioxide particles prepared by the above method.

The preparation method of silicon dioxide particles of the present disclosure uses fumed silica as a raw material and compresses the fumed silica into dense large particles through a freezing step. The method of the present disclosure involves no chemical reactions, has controllable processes and does not introduce impurities, so high-purity silicon dioxide particles can be obtained. Moreover, compared with organosilicon compounds, fumed silica used as the raw material has lower costs; the reaction conditions are simpler and more controllable, the operation is more convenient, and the method is suitable for large-scale industrial production.

### BRIEF DESCRIPTION OF THE DRAWINGS

FIG. 1A to FIG. 1D are SEM photographs at different magnifications of the solid matter obtained after thawing in Example 1, after crushing and before calcination, respectively.
FIGS. 2A to 2H are SEM photographs at different magnifications of the silicon dioxide particles prepared in Example 1, respectively.
FIGS. 3A to 3D are SEM photographs at different magnifications of the silicon dioxide particles prepared in Comparative Example 1, respectively.
FIGS. 4A to 4H are SEM photographs at different magnifications of silicon dioxide particles purchased from Mitsubishi Corporation, respectively.

### DETAILED DESCRIPTION

The present disclosure will be described in detail below in conjunction with specific embodiments.

The present disclosure provides a preparation method of silicon dioxide particles, comprising: mixing fumed silica and water to form a suspension; freezing the suspension into a solid state; and thawing the solid material and performing solid-liquid separation to obtain a solid matter.

The term "fumed silica" in the present patent refers to nano silicon dioxide synthesized by a gas phase method (such as high-temperature hydrolysis of metal halides), which is a fluffy aggregate composed of ultra-fine particles and has an extremely high specific surface area and excellent chemical purity.

The inventors have found that water freezing causes insoluble substances in water to aggregate and exerts tremendous pressure on them, and such pressure (greater than 200 MPa) is far higher than the pressure achievable by ordinary hydraulic presses (20-30 MPa). Utilizing this phenomenon, the present invention mixes fumed silica with water to form a suspension, freezes the suspension so that the nano-scale fumed silica in the suspension aggregates and bears pressure, and the raw material fumed silica is compressed into dense large particles under the pressure. The method of the present invention adds no other substances, and the whole process is a physical change without chemical reactions, so no impurities are introduced, the process is controllable, high-purity silicon dioxide particles can be obtained without impurity removal, the operation is more convenient, the production cost is low, and the method is suitable for large-scale industrial production. Only pure water is discharged, which is greener and environmentally friendly without pollution to the environment.

Since no impurities are introduced during the preparation process of the present disclosure, the types and contents of impurities in the final silicon dioxide particles are basically the same as those contained in the raw materials. Therefore, to obtain high-purity silicon dioxide particles, high-purity fumed silica and high-purity water need to be selected. For example, fumed silica with an impurity content of less than 1 ppm and deionized water, pure water or ultrapure water can be selected to obtain high-purity silicon dioxide particle products.

"Pure water" refers to water prepared by appropriate processing methods such as electrodialysis, ion exchange, reverse osmosis (RO) or distillation using raw water complying with sanitary specifications for drinking water, which contains no additives, is colorless and transparent, and can be directly drunk. The conductivity of pure water is generally 0.1-1.0 µS/cm, the resistivity (at 25 °C) is generally 1.0-10.0 MΩ•cm, and the salt content is generally less than 1 mg/L.

"Ultrapure water" refers to water obtained by further removing almost all conductive media in pure water, and reducing colloidal substances, gases and organic substances that do not dissociate in water to an extremely low level. The resistivity of ultrapure water is generally greater than 18 MΩ•cm or close to the theoretical limit of 18.25 MΩ•cm.

Of course, based on the inventive concept of the present disclosure, fumed silica with an impurity content higher than the above range can also be used to realize the purpose of the present disclosure, and the purity of the obtained silicon dioxide particles corresponds to the purity of the raw materials. That is, those skilled in the art can reasonably select fumed silica raw materials with corresponding purity according to the grade of silicon dioxide particles expected to be obtained; the present disclosure is not limited to the above purity range, and fumed silica of any purity can realize the inventive purpose.

The particle size of the fumed silica raw material can be selected within the range of 5-100 nm. For example, the upper and lower limits of the particle size of fumed silica can be any two values selected from 5 nm, 10 nm, 20 nm, 30 nm, 40 nm, 50 nm, 60 nm, 70 nm, 80 nm, 90 nm and 100 nm.

In an optional embodiment, the mass content of fumed silica in the suspension ranges from 1% to 30%. Within this content range, the fumed silica can form a stable suspension, ensuring uniform dispersion of the raw material. Any content within the above range can be selected, comprising but not limited to 1%, 2%, 3%, 5%, 6%, 7%, 8%, 9%, 10%, 11%, 12%, 13%, 14%, 15%, 20%, 25%, 30%, and the like.

In an optional embodiment, to improve the uniformity of raw materials in suspensions with high solid content, so as to enhance the quality and production efficiency of the produced silicon dioxide, ammonia water can be added to the mixed system during mixing of fumed silica and water. The addition amount of ammonia water can be any amount up to the saturated concentration (pH about 11.7). For example, the pH value of the suspension after adding ammonia water can be greater than 7, 7.5, 8, 8.5, 9, 9.5, 10, 10.5, 11, 11.7 (saturated), and the like. Preferably, the pH value of the suspension after adding ammonia water is maintained between 8 and 9. The ammonia water added into the suspension will volatilize in subsequent steps and will not remain in the product, so it will not affect the purity of the product.

After preparing the suspension, the suspension is subjected to freezing. Freezing can be carried out under any conditions, such as natural low-temperature environments or external refrigeration equipment. During the process from the start of icing to complete solidification of the suspension, the fumed silica powder gradually aggregates. After the suspension is completely converted into a solid state, the fumed silica wrapped in ice is continuously subjected to the pressure exerted by the ice layer, and the fumed silica powder is compressed to form dense large particles.

In an optional embodiment, after the suspension is frozen into a solid state, it is kept at a freezing temperature of -2°C or lower for more than 10 minutes, so that the fumed silica can fully aggregate to form a dense structure. The longer the holding time in the solid state, the longer the pressure application time on the fumed silica, and the denser the formed structure. However, after the holding time exceeds a certain critical value, further extending the holding time has little effect on improving compactness. Those skilled in the art can select an appropriate holding time according to the expected compactness of the silicon dioxide particles, comprising but not limited to 10 minutes, 20 minutes, 30 minutes, 40 minutes, 50 minutes, 1 hour, 2 hours, 3 hours, 5 hours, 6 hours, 8 hours, 10 hours, 12 hours, 20 hours, 30 hours, 40 hours, and the like. The freezing temperature can be -2°C, -10°C, -15°C, -20°C, -30°C, -40°C, -50°C, -60°C, -70°C, -80°C, -90°C, -100°C and other temperatures.

Subsequently, the solid material is thawed, and water and solid matter are obtained after solid-liquid separation. The solid matter is massive dense particles formed by aggregated fumed silica powder and has certain mechanical strength. To further improve the density and hardness of the solid matter, a calcination step can be added subsequently. The calcination step can reduce the hydroxyl content in silicon dioxide particles and simultaneously increase their density and hardness. There are two sequences for calcination: the solid matter can be directly calcined and then crushed to the target particle size; alternatively, the solid matter can be crushed before calcination. The solid matter has sufficient mechanical strength to avoid complete pulverization during crushing, and small particles with the target particle size are obtained before calcination.

The process of crushing first and then calcining is preferred: the solid matter is crushed first to screen small particles with a particle size range of 50-300 µm, and then the crushed small particles are calcined at a temperature of 950°C or higher. The process of crushing before calcination is preferred because the solid matter has low hardness before calcination, and almost no impurities are introduced during crushing. The calcination temperature directly determines the crystal form of silicon dioxide: amorphous silicon dioxide is formed when the calcination temperature is lower than 1400°C, and crystalline silicon dioxide is formed when the calcination temperature is higher than 1400°C. Those skilled in the art can select an appropriate calcination temperature according to actual application requirements, comprising but not limited to 1000°C, 1100°C, 1200°C, 1300°C, 1400°C, 1500°C, 1600°C, 1700°C, 1800°C, and the like.

In an optional embodiment, the calcination step is maintained at the set calcination temperature for more than 30 minutes. Those skilled in the art can select a corresponding holding time according to parameters such as the hydroxyl content of raw materials and the target density and hardness of silicon dioxide particles, comprising but not limited to 30 minutes, 1 hour, 2 hours, 3 hours, 5 hours, 6 hours, 8 hours, 10 hours, 15 hours, 20 hours, 25 hours, 30 hours, and the like.

As described above, the silicon dioxide particles prepared by the method of the present disclosure are divided into amorphous and crystalline types. For amorphous silicon dioxide particles, the bulk density is 1.25 g/cm³ and the Mohs hardness is Grade 6.5. The silicon dioxide particles prepared by the present method have extremely low impurity content and no gas-liquid inclusions inside.

Of course, in addition to the above core steps, the preparation method of the present disclosure can be added with other auxiliary steps. For example, a drying step can be added after solid-liquid separation and before crushing, and any conventional drying method can be adopted. Before calcination after crushing, the small particles can be washed to remove internal impurities, and suitable washing liquids and washing processes can be selected according to different impurity types.

To make the technical solution of the present disclosure clear and easy to understand, the technical solution of the present disclosure will be further described below in conjunction with the accompanying drawings and specific embodiments. The following embodiments are only used to explain the present disclosure and do not impose any formal or substantial limitations on the present disclosure.

The present disclosure will be further illustrated through specific examples below. However, these examples are merely illustrative and shall not limit the protection scope of the present disclosure. Unless otherwise specified, all reagents, raw materials and testing instruments used in the following Examples and Comparative Examples are commercially available.

### Example 1

(1) Mixing: 1 kg of fumed silica with an average particle size of 5 nm, SiO₂ purity of 99.9999% and specific surface area of 100 m²/g is mixed with 10 kg of pure water, 40 mL of ammonia water is added, and the mixture is stirred for 5 minutes to obtain a suspension.
(2) Freezing and Thawing: The above suspension is placed in a freezer compartment of an ordinary refrigerator at -8°C, kept for 2 hours after being completely solidified, then taken out and thawed at room temperature for 15 hours.
(3) Solid-Liquid Separation and Drying: The thawed mixture is suction-filtered with a sand core funnel to obtain wet bulk powder. The powder is placed in a forced air drying oven at 100°C and dried for 15 hours to obtain massive solid matter.
(4) Crushing and Sieving: The massive solid matter is crushed by a double roll crusher, followed by sieving with a vibrating sieve machine to screen small particles with a particle size range of 50-300 µm.
(5) Calcination: The sieved small particles are placed in a muffle furnace, calcined at 1200 °C for 12 hours, and naturally cooled to obtain high-purity silicon dioxide particle products.

Inductively Coupled Plasma Mass Spectrometry (ICP-MS) is adopted to test the metal ion impurities in the raw materials used in this Example and the obtained silicon dioxide particles, and the total impurity content is less than 1 µg/g, as shown in Table 1 below.

**Table 1: Content of Metal Ion Impurities in Raw Materials and Silicon Dioxide Particles Obtained in Example 1 (Unit: µg/g)**

| | Li | Na | K | Mg | Ca | Al | Fe | Mn | Ni | Ti | Cu | Cr | B |
|---|---|---|---|---|---|---|---|---|---|---|---|---|---|
| Raw Materi | 0.02 | 0.01 | <0.01 | 0.02 | <0.01 | <0.01 | <0.01 | <0.01 | <0.01 | <0.01 | 0.01 | <0.01 | <0.01 |
| Silicon Dioxide Particles | 0.05 | 0.45 | <0.01 | <0.01 | <0.01 | <0.01 | <0.01 | <0.01 | <0.01 | <0.01 | <0.01 | <0.01 | <0.01 |

It can be seen from the data in Table 1 that the preparation method of the present disclosure hardly introduces external impurities during the whole production process.

The bulk density of the silicon dioxide particles prepared in this Example is 1.25 g/cm³, and the Mohs hardness is Grade 6.5.

### Example 2

This Example provides a method for synthesizing high-purity silicon dioxide particles, which is basically the same as Example 1, except that the average particle size of the raw material fumed silica is 80 nm, no ammonia water is added during stirring, and the temperature in the refrigerator freezing compartment in the freezing step is -18°C. Finally, high-purity silicon dioxide particle products are obtained. ICP-MS detection shows that the total metal ion impurity content of the obtained silicon dioxide particles is less than 1 µg/g. The bulk density is 1.25 g/cm³, and the Mohs hardness is Grade 6.5.

### Example 3

This Example provides a method for synthesizing high-purity silicon dioxide particles, which is basically the same as Example 1, except that the mass of fumed silica in step (1) mixing is 1.5 kg, and the volume of added ammonia water is 60 ml. Finally, high-purity silicon dioxide particle products are obtained. ICP-MS detection shows that the total metal ion impurity content of the obtained silicon dioxide particles is less than 1 µg/g. The bulk density is 1.25 g/cm³, and the Mohs hardness is Grade 6.5.

### Example 4

This Example provides a method for synthesizing high-purity silicon dioxide particles, which is basically the same as Example 1, except that the freezing temperature is -3°C in step (2) freezing and thawing. Finally, high-purity silicon dioxide particle products can be obtained. ICP-MS detection shows that the total metal ion impurity content of the obtained silicon dioxide particles is less than 1 µg/g. The bulk density is 1.25 g/cm³, and the Mohs hardness is Grade 6.5.

### Example 5

This Example provides a method for synthesizing high-purity silicon dioxide particles, which is basically the same as Example 1, except that the freezing temperature is -80°C in step (2) freezing and thawing. Finally, high-purity silicon dioxide particle products can be obtained. ICP-MS detection shows that the total metal ion impurity content of the obtained silicon dioxide particles is less than 1 µg/g. The bulk density is 1.25 g/cm³, and the Mohs hardness is Grade 6.5.

### Example 6

This Example provides a method for synthesizing high-purity silicon dioxide particles, which is basically the same as Example 1, except that the solid state is kept for 30 minutes after forming a solid state in step (2) freezing and thawing. Finally, high-purity silicon dioxide particle products can be obtained. ICP-MS detection shows that the total metal ion impurity content of the obtained silicon dioxide particles is less than 1 µg/g. The bulk density is 1.25 g/cm³, and the Mohs hardness is Grade 6.5.

### Example 7

This Example provides a method for synthesizing high-purity silicon dioxide particles, which is basically the same as Example 1, except that the solid state is kept for 24 hours after forming a solid state in step (2) freezing and thawing. Finally, high-purity silicon dioxide particle products can be obtained. ICP-MS detection shows that the total metal ion impurity content of the obtained silicon dioxide particles is less than 1 µg/g. The bulk density is 1.25 g/cm³, and the Mohs hardness is Grade 6.5.

### Example 8

This Example provides a method for synthesizing high-purity silicon dioxide particles, which is basically the same as Example 1, except that the calcination temperature is 1000°C in step (5) calcination. Finally, high-purity silicon dioxide particle products can be obtained. ICP-MS detection shows that the total metal ion impurity content of the obtained silicon dioxide particles is less than 1 µg/g. The bulk density is 1.25 g/cm³, and the Mohs hardness is Grade 6.5.

### Example 9

This Example provides a method for synthesizing high-purity silicon dioxide particles, which is basically the same as Example 1, except that the calcination time is 1 hour in step (5) calcination. Finally, high-purity silicon dioxide particle products can be obtained. ICP-MS detection shows that the total metal ion impurity content of the obtained silicon dioxide particles is less than 1 µg/g. The bulk density is 1.25 g/cm³, and the Mohs hardness is Grade 6.5.

### Example 10

This Example provides a method for synthesizing high-purity silicon dioxide particles, which is basically the same as Example 1, except that the calcination time is 48 hours in step (5) calcination. Finally, high-purity silicon dioxide particle products (amorphous) can be obtained. ICP-MS detection shows that the total metal ion impurity content of the obtained silicon dioxide particles is less than 1 µg/g. The bulk density is 1.25 g/cm³, and the Mohs hardness is Grade 6.5.

### Example 11

This Example provides a method for synthesizing high-purity silicon dioxide particles, which is basically the same as Example 1, except that the calcination temperature is 1600°C in step (5) calcination. Finally, high-purity silicon dioxide particle products (crystalline) can be obtained. ICP-MS detection shows that the total metal ion impurity content of the obtained silicon dioxide particles is less than 1 µg/g. The bulk density is 2.65 g/cm³, and the hardness is Mohs hardness grade 7.

### Comparative Example 1

This Example provides a method for synthesizing high-purity silicon dioxide particles, which is basically the same as Example 1, except that non-high-purity fumed silica (total impurity content >20 µg/g) is used as the raw material.

ICP-MS detection shows that the total metal ion impurity content of the obtained silicon dioxide particles is greater than 20 µg/g.

### Comparative Example 2

This Example provides a method for synthesizing high-purity silicon dioxide particles: fumed silica and pure water are mixed uniformly, and then the mixed suspension is directly dried at a high temperature of 200°C without adopting the freezing process. The results show that the particle size of the powder after drying is all less than 1 µm, failing to reach the particle size standard (50-300 µm) required for silicon dioxide particles.

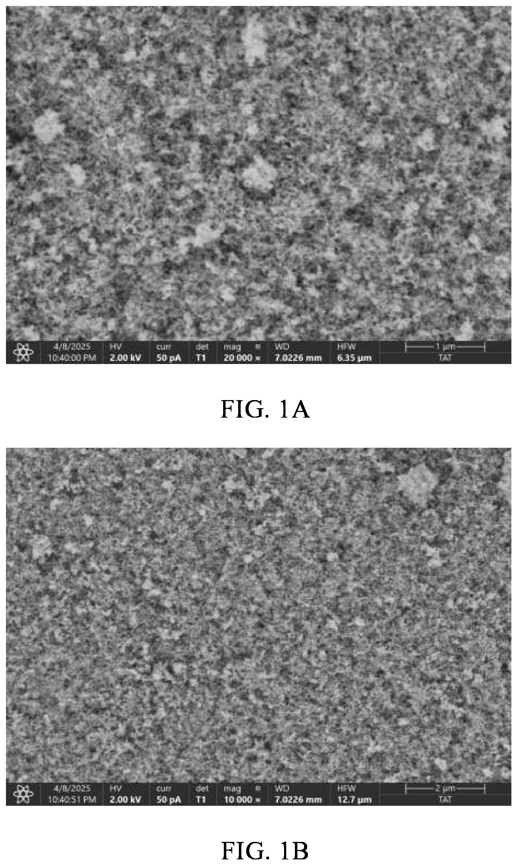

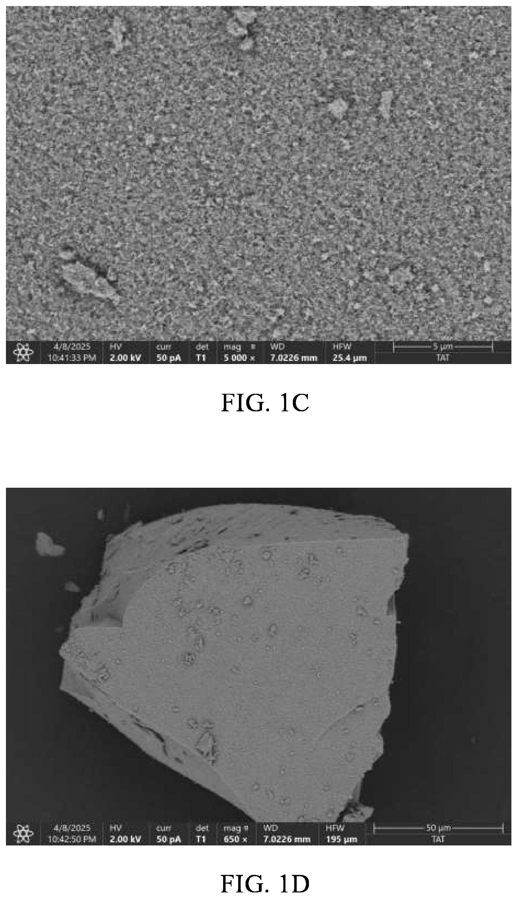

FIG. 1A to FIG. 1D show SEM photographs at different magnifications of particles obtained by crushing the solid matter after freezing and thawing in Example 1 before calcination. It can be seen from the photographs that the raw material fumed silica powder is pressed into a dense structure after freezing.

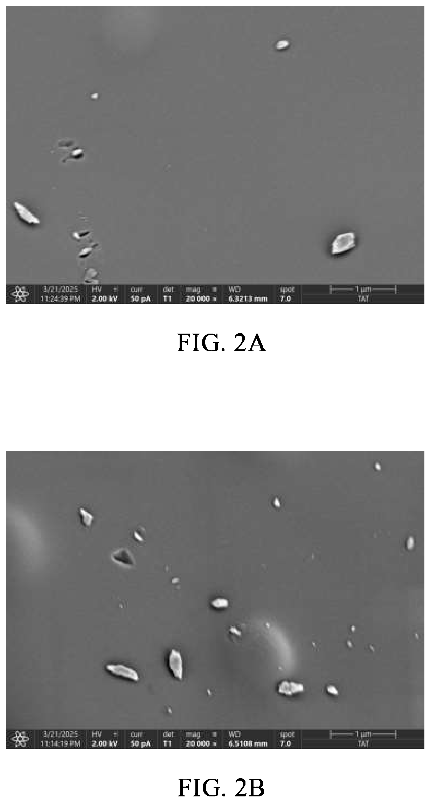

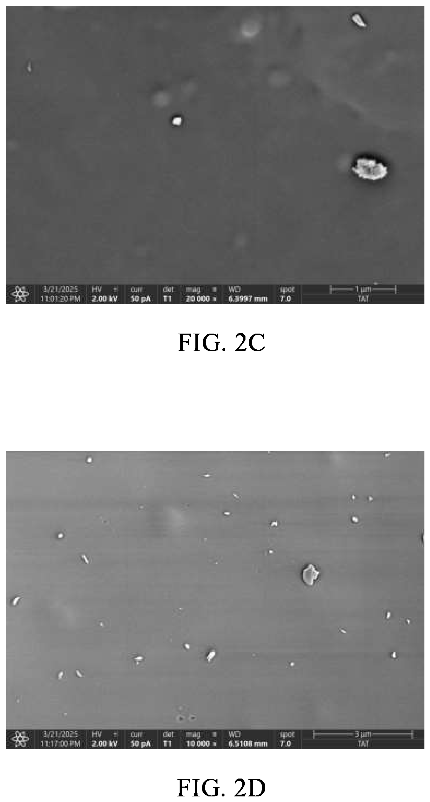

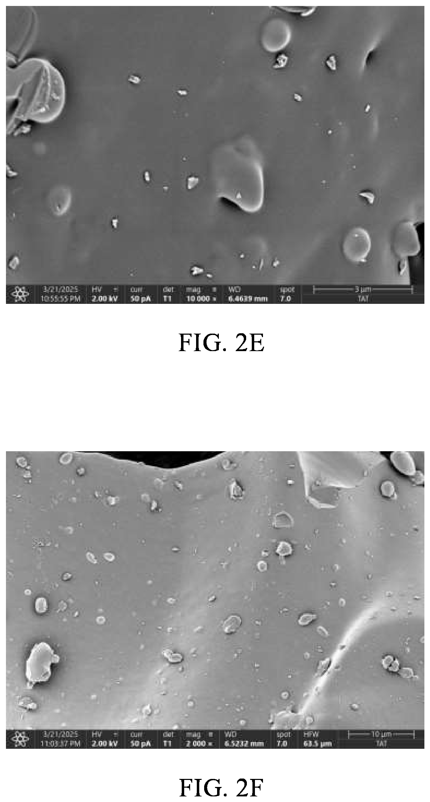

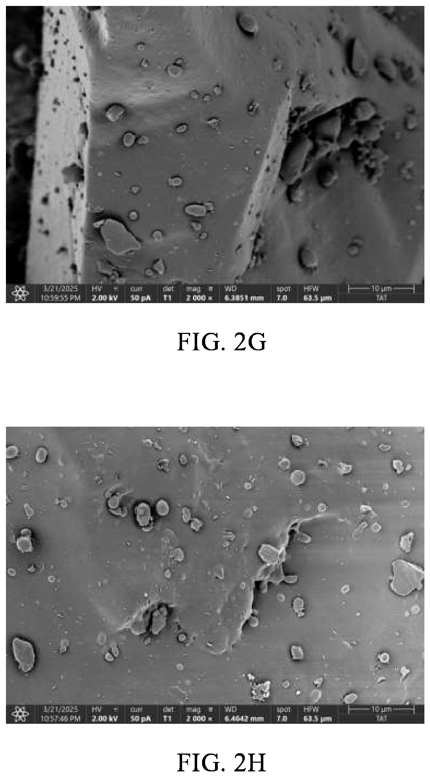

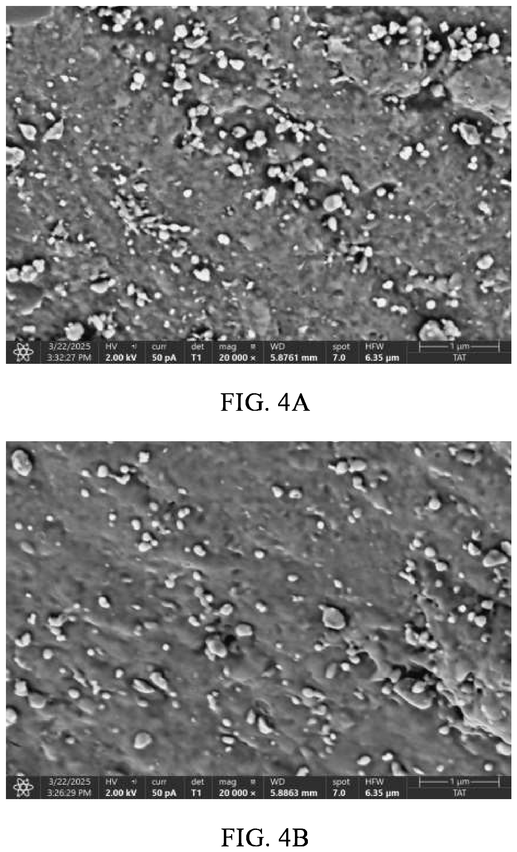

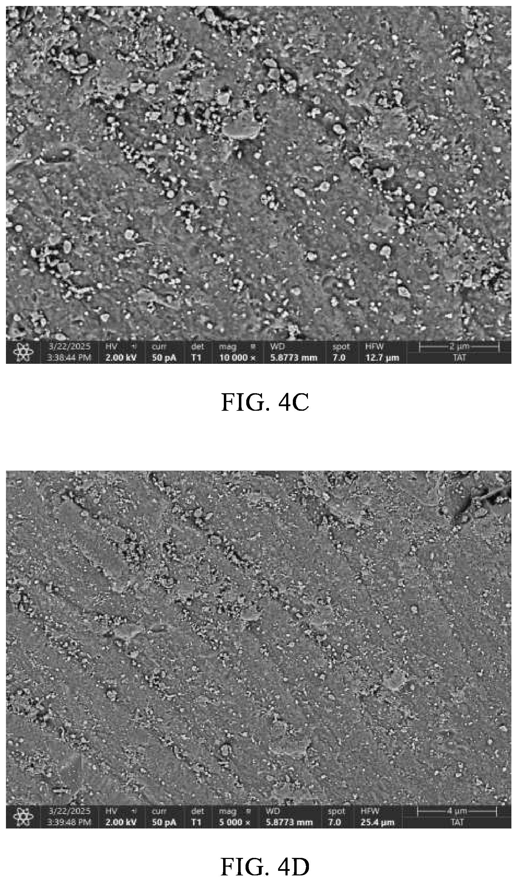

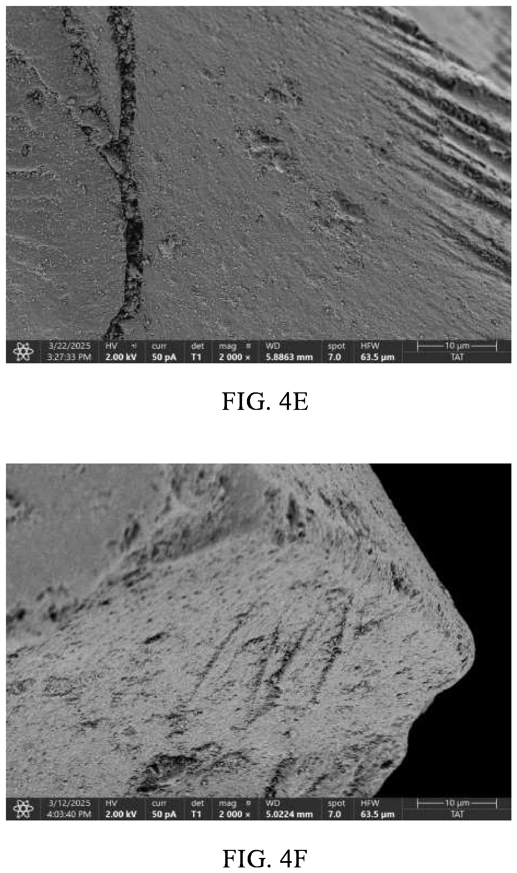

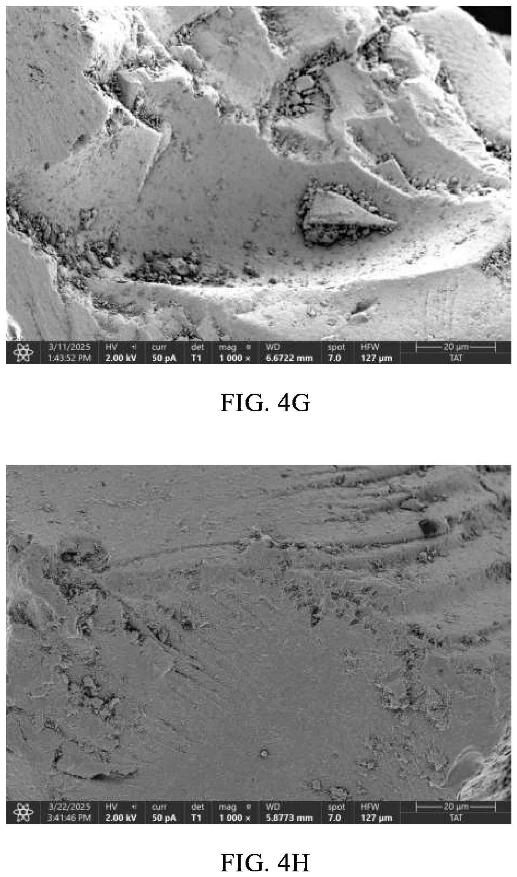

FIG. 2A to FIG. 2H are SEM photographs at different magnifications of the silicon dioxide particles prepared in Example 1, respectively. It can be seen from the photographs that the amount of nano-powder attached to the surface of the silicon dioxide particles prepared by the method of the present disclosure is less than that of commercially available products (silicon dioxide particles purchased from Mitsubishi Corporation shown in FIG. 4A to FIG. 4H). The reduction of surface nano-powder helps avoid material agglomeration and abnormal grain boundary migration during the subsequent melting process of silicon dioxide particles, achieves better sintering compactness and stronger crystallization inhibition ability, thereby greatly improving the structural stability under high-temperature environments.

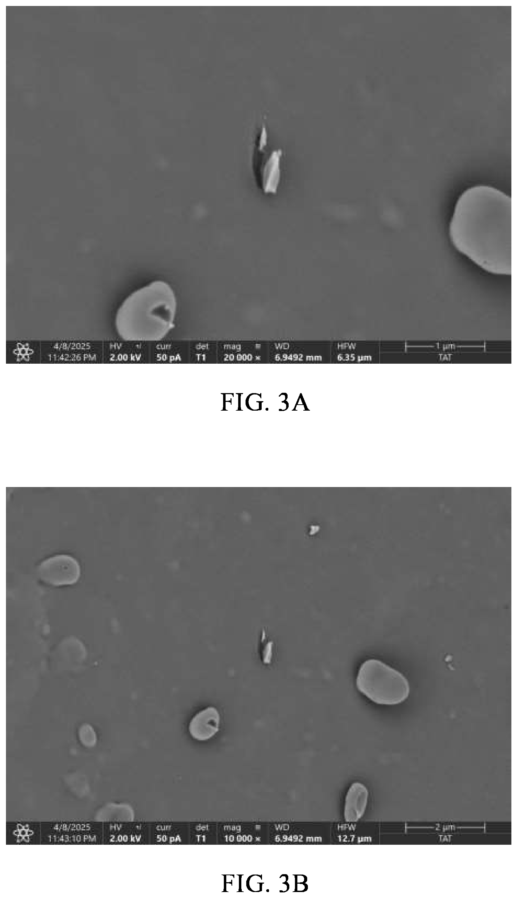

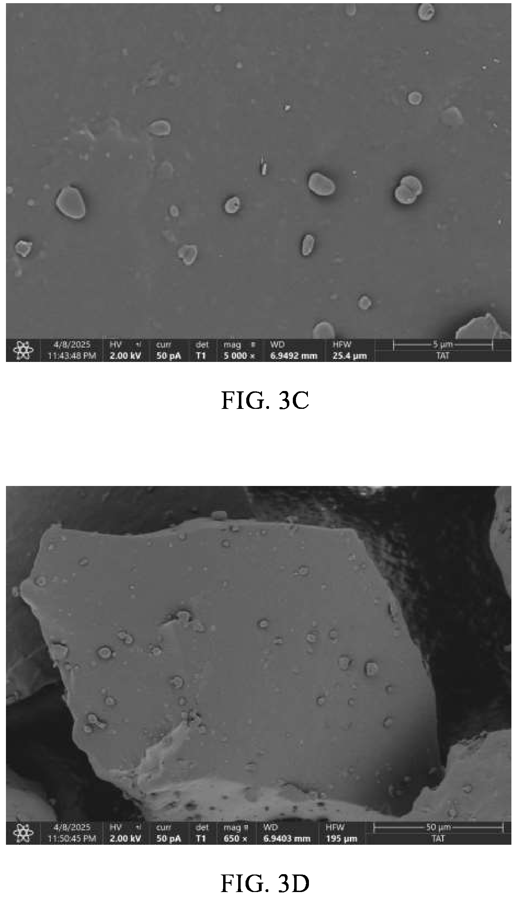

FIG. 3A to FIG. 3D show SEM photographs of the silicon dioxide particles obtained in Comparative Example 1. It can be seen that the morphology of the silicon dioxide particles obtained in Comparative Example 1 is basically the same as that of the silicon dioxide particles obtained in Example 1. This indicates that the raw material purity will not affect the pressure exerted on the raw materials by the freezing step, and a dense structure can still be obtained.

Comparing Examples 1-11, Comparative Example 1 and Comparative Example 2, it can be seen that the freezing step can indeed exert pressure on the fumed silica in the suspension to make it aggregate and form dense large particles with certain mechanical strength.

It can be seen from Examples 1-10 and Example 11 that silicon dioxide particles in an amorphous state are obtained when the calcination temperature is lower than 1400°C; crystalline silicon dioxide particles can be obtained when the calcination temperature exceeds 1400°C.

The preferred embodiments of the present disclosure described above are only used to assist in explaining the core solution of the present disclosure. The preferred embodiments do not list all details completely, nor limit the present disclosure to the above specific embodiments. Obviously, numerous modifications and variations can be derived based on the contents recorded in this specification. This specification selects and describes the above embodiments in detail to clearly explain the core principles and practical application scenarios of the present disclosure, so that those skilled in the art can fully understand and apply the solution of the present disclosure. The protection scope of the present disclosure is only defined by the claims, the full coverage of the claims and equivalent technical solutions thereof.

## Claims

1. A preparation method of silicon dioxide particles, comprising:
mixing fumed silica and water to form a suspension;
freezing the suspension into a solid state; and
thawing the solid material and performing solid-liquid separation to obtain solid matter.

2. The preparation method according to claim 1, wherein after the suspension is frozen into the solid state, it is kept at a freezing temperature of -2°C or lower for more than 10 minutes.

3. The preparation method according to claim 1, wherein the particle size of the fumed silica ranges from 5 nm to 100 nm.

4. The preparation method according to claim 1, wherein ammonia water is added to the mixed system during mixing of fumed silica and water.

5. The preparation method according to any one of claims 1 to 4, wherein the mass content of fumed silica in the suspension ranges from 1% to 30%.

6. The preparation method according to claim 1, wherein the preparation method further comprises:
crushing the solid matter to obtain small particles with a particle size ranging from 50 µm to 300 µm; and
calcining the small particles at a temperature of 950°C or higher.

7. The preparation method according to claim 6, wherein the calcination step is maintained at the set calcination temperature for more than 30 minutes.

8. Silicon dioxide particles being prepared by the preparation method according to any one of claims 1 to 7.
